Europäisches Patentamt

European Patent Office

Office européen des brevets

(19)

(11) Numéro de publication: **0 332 494**
**A1**

(12) **DEMANDE DE BREVET EUROPEEN**

(21) Numéro de dépôt: **89400521.4**

(22) Date de dépôt: **24.02.89**

(51) Int. Cl.4: **C 01 G 23/00**
**C 04 B 35/46**

(30) Priorité: **09.03.88 FR 8803019**

(43) Date de publication de la demande:
**13.09.89 Bulletin 89/37**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Seon, Françoise**
**50, avenue de la Dame Blanche**
**F-94120 Fontenay/Sous/Bois (FR)**

(74) Mandataire: **Dubruc, Philippe et al**
**RHONE-POULENC INTERSERVICES Service Brevets**
**Chimie 25, quai Paul-Doumer**
**F-92408 Courbevoie Cédex (FR)**

(54) Procédé de préparation de titanates d'alcalino-terreux.

(57) L'invention a trait à un procédé de préparation de titanate d'alcalino-terreux de formule $MTiO_3$ (M représentant l'alcalino-terreux) en milieu sels fondus.

Plus précisément, le procédé selon l'invention est caractérisé en ce qu'il consiste à faire réagir directement dans un bain de sels fondus :
- au moins un composé de l'élément titane,
- au moins un composé A capable de réagir dans ledit bain de sels avec ledit composé de l'élément titane pour générer l'espèce $TiO_3^{2-}$,
- au moins un nitrate de l'élément alcalino-terreux M,
puis à récupérer, après séparation du milieu réactionnel, le titanate d'alcalino-terreux désiré.

EP 0 332 494 A1

**Description**

## PROCEDE DE PREPARATION DE TITANATES D'ALCALINO-TERREUX

La présente invention a trait à un procédé de préparation de titanates d'alcalino-terreux.

Plus précisement, la présente invention a pour objet la préparation de ces produits directement sous forme de poudres homogènes par réactions chimiques en bains de sels fondus.

De tels produits et en particulier le titanate de baryum trouvent une application privilégiée dans la préparation de compositions céramiques destinées notamment à la fabrication de condensateurs ou de résistances électriques.

On connait différentes méthodes de préparation du titanate de baryum. En particulier, il peut être préparé par chamottage entre un sel de baryum contenant un anion volatil, le carbonate de baryum par exemple, et de l'oxyde de titane.

Cette technique présente cependant l'inconvénient d'être d'un contrôle délicat car basée sur des réactions de diffusion à la fois lentes et difficiles entre solides cristallisés, de nécessiter des températures très élevées et d'entrainer souvent des risques d'une part de formation de solutions solides inhomogènes et d'autre part d'introduction d'impuretés génantes lors de l'étape de broyage ultérieure qu'il est généralement nécessaire de mettre en oeuvre après calcination.

Plus récemment, on a découvert qu'il était également envisageable de procéder par calcination ou décomposition thermique de composés précurseurs obtenus au moyen de diverses réactions se déroulant en phases liquides, généralement aqueuses. L'inconvénient majeure de cette voie réside dans le contrôle difficile de la qualité des précurseurs obtenus, de sorte que la pyrolyse de ces derniers peut conduire à des particules de titanate de baryum dont la composition et/ou la distribution des tailles sont relativement inhomogènes.

Une troisième voie, plus intéressante, a été enfin explorée dans le brevet US 4.293.534 dans lequel on décrit un procédé de synthèse basé sur des réactions chimiques directes en bains de sels fondus de type hydroxyde, selon le schéma général suivant :

$$BaO + TiO_2 \rightarrow BaTiO_3$$
$$ou\ SrO + TiO_2 \rightarrow SrTiO_3$$

En référence aux divers exemples donnés dans ce brevet, il s'avère que la réalisation industrielle du procédé décrit passe par la mise en oeuvre nécessaire d'au moins quatre étapes distinctes et successives qui sont :

1. la mise en suspension dans de l'eau, sous agitation vigoureuse, d'un mélange de $TiO_2$ et de $Sr(NO_3)_2$ dans des proportions qui correspondent à la stoechiométrie du produit recherché,

2. l'ajout à cette suspension d'une solution aqueuse très concentrée d'hydroxyde de sodium et d'hydroxyde de potassium (solution proche de la saturation), ayant pour effet de provoquer la formation d'un gel ; au cours de cette opération $Sr(NO_3)_2$ se transforme en $Sr(OH)_2$,

3. le chauffage sous air à une température de l'ordre de 200°C du gel ainsi obtenu de manière à éliminer l'eau et à provoquer la transformation de $Sr(OH)_2$ en SrO.

4. une calcination à haute température (600°C) de manière à pouvoir opérer dans un bain d'hydroxydes fondus la réaction :
$$SrO + TiO_2 \rightarrow SrTiO_3$$

Il ressort de l'analyse ci-dessus que le procédé cité est en fait de mise en oeuvre peu aisée (changement de creuset obligatoire entre l'étape 3 et l'étape 4), longue (durée totale supérieure à une quinzaine d'heures) et coûteuse en énergie (évaporation d'une quantité importante d'eau, températures de calcination relativement élevées) et qu'il revient finalement, dans sa phase finale, à faire réagir un oxyde de titane et un oxyde de baryum ou de strontium dans une phase fondue d'hydroxydes à plus de 40 % en poids.

D'autre part, la qualité des produits obtenus peut être insuffisante.

La présente invention a pour but de proposer un procédé de préparation de titanates d'alcalino-terreux obviant aux inconvénients inhérents à la mise en oeuvre des procédés de l'art antérieur et qui permette, par des moyens simples, efficaces, économiques et de mise en oeuvre aisée, d'aboutir de manière fiable et reproductible auxdits titanates d'alcalino-terreux directement sous forme de poudres à morphologie et de composition homogènes.

Dans ce but, la Demanderesse a mis au point un procédé perfectionné de préparation en milieu sels fondus d'un titanate d'alcalino-terreux de formule $MTiO_3$, où M désigne l'élément alcalino-terreux, et qui est caractérisé en ce qu'il consiste à faire réagir directement dans ledit milieu :
- au moins un composé de l'élément titane,
- au moins un composé A capable de réagir dans ledit milieu avec ledit composé de l'élément titane pour générer l'espèce $TiO_3^{2-}$,
- au moins un nitrate de l'élément alcalino-terreux M, puis à récupérer, après séparation du milieu réactionnel, le titanate d'alcalino-terreux désiré.

Selon un mode particulièrement avantageux, et donc préféré, de mise en oeuvre du procédé selon l'invention, le nitrate de l'élément alcalino-terreux M sert également à créer, au moins en partie, le milieu formant solvant dans lequel se passe la réaction.

Les composés de l'élément titane convenant pour la présente invention peuvent être notamment choisis, seuls ou en mélanges, parmi le dioxyde de titane $TiO_2$, les hydroxydes de titane, les halogénures de titane, les oxyhalogénures de titane, les hydroxyhalogénures de titane et les carbonates de titane.

Les composés du titane préférés pour la mise en oeuvre du procédé selon l'invention sont le dioxyde de titane et les halogénures de titane.

Les halogénures et les oxyhalogénures de titane seront de préférence respectivement des chlorures et des oxychlorures, bien que l'utilisation de tout autre halogénure de titane ou de titanyle, comme un bromure, une iodure ou un fluorure, soit bien entendu également possible ; conviennent aussi plus particulièrement le trichlorotitane $TiCl_3$, le tétrachlorotitane $TiCl_4$ et l'oxychlorure de titane $TiOCl_2$.

A titre d'hydroxyde de titane, on peut citer plus particulièrement $Ti(OH)_4$.

Les composés A définis ci-dessus sont de préférence choisis parmi les hydroxydes et les carbonates d'alcalins ou d'alcalino-terreux, et encore plus préférentiellement choisis parmi les hydroxydes d'alcalins tels que l'hydroxyde de sodium ou l'hydroxyde de potassium. L'hydroxyde de sodium convient particulièrement bien.

D'autre part, d'un point de vue pratique, les éléments alcalino-terreux particulièrement visés par la présente invention sont le baryum et le strontium, ces deux éléments offrant en effet les plus grands débouchés dans l'application électronique des titanates.

Le choix de la nature du bain de sels fondus qui forme le milieu solvant pour les réactions de formation du titanate désiré, est d'une manière générale gouverné par les deux exigences pratiques suivantes: les produits réactifs doivent tout d'abord pouvoir se dissoudre, au moins en partie, dans ce bain ; et d'autre part, le produit de réaction désiré doit y être peu soluble.

On aura bien entendu également intérêt à travailler avec des compositions de bain qui présentent des points de fusion les plus bas possible, ceci d'une part pour empêcher une trop grande consommation d'énergie et d'autre part pour éviter tout problème technologique, de corrosion notamment ; à cet effet, il peut être avantageux de travailler avec des compositions eutectiques.

Les bains de sels fondus utilisables dans la présente invention peuvent ainsi être avantageusement constitués par des halogénures, et de préférence des chlorures en présence ou non de fluorures, de métaux alcalins et/ou de métaux alcalino-terreux, par des nitrates de métaux alcalins et/ou de métaux alcalino-terreux, ou bien encore par des mélanges de ceux-ci.

Dans le cas particulier et préféré où le nitrate de l'élément alcalino-terreux participant à la réaction de formation du titanate désiré sert également à la création du milieu formant solvant, c'est à dire dans le cas où le bain de sels fondus sert à la fois de réactif et de solvant, il est préférable que ledit bain de sels fondus ne soit constitué que de nitrates, et plus particulièrement que d'un mélange de nitrate de l'élément alcalino-terreux M et de nitrates d'alcalins.

Ainsi, si l'on désire préparer du titanate de baryum, le bain de sels fondus sera de préférence constitué par exemple d'un mélange nitrate de baryum - nitrate de sodium, ou d'un mélange nitrate de baryum - nitrate de potassium ; de même, si le produit désiré est le titanate de strontium, on pourra utiliser des binaires du type nitrate de strontium - nitrate de potassium ou bien encore nitrate de strontium - nitrate de sodium.

La température à laquelle est conduite la réaction de formation du titanate désiré est comprise entre 100° C et 700° C, de préférence comprise entre 350° C et 500° C.

Une température comprise dans ces fourchettes est alors suffisamment basse pour limiter les consommations d'énergie et les problèmes technologiques susmentionnés, mais aussi suffisamment élevée pour que les cinétiques des réactions mises en jeu dans le présent procédé soient rapides et donc compatibles avec une bonne marche industrielle.

Les quantités de réactifs nécessaires à mettre en oeuvre dans le présent procédé doivent correspondre, au minimum, aux quantités stoëchiométriques de la réaction qui est mise en jeu dans le milieu réactionnel considéré, laquelle se déduit tout naturellement de la nature des réactifs de départ utilisés.

Ainsi, à titre d'exemple, si $TiO_2$ constitue le précurseur de l'élément titane, et NaOH le composé A tel que défini précédemment, on aura la réaction globale suivante :
$$TiO_2 + 2 \, NaOH + M(NO_3)_2 \rightarrow MTiO_3 + 2 \, NaNO_3 + H_2O$$

Si, par exemple, l'on remplace $TiO_2$ par $TiCl_3$, les autres composés restant les mêmes, la réaction devient :
$$2 \, TiCl_3 + 10 \, NaOH + 2 \, M(NO_3)_2 \rightarrow 2 \, MTiO_3 + NaNO_2 + 3 \, NaNO_3 + 6 \, NaCl + 5 \, H_2O$$

On notera d'ores et déjà que, dans les réactions ci-dessus, l'hydroxyde de sodium (composé A) doit être présent dans le milieu réactionnel en quantité suffisante pour réagir avec le composé de l'élément de titane de manière à générer l'espèce $TiO_3^{2-}$ mais en quantité insuffisante pour provoquer la transformation du nitrate de l'élément alcalino-terreux M participant à la réaction en son oxyde MO. Le maintien de l'élément alcalino-terreux M sous la forme nitrate constitue ainsi l'une des différences essentielles du présent procédé par rapport au procédé décrit dans le brevet US 4.293.543.

Bien entendu, pour que la réaction de formation du titanate désiré ait toujours lieu en phase fondue, il est nécessaire de partir d'une composition initiale de bain telle que sa variation en cours de réaction n'entraine pas la prise en masse de la phase fondue à la température réactionnelle.

Dans un mode pratique de mise en oeuvre du procédé selon l'invention, on prépare tout d'abord un bain de sels fondus contenant les espèces solvatantes, le nitrate de l'élément alcalino-terreux M et le composé A, puis on met en contact le composé du titane avec ledit bain de sels, le composé du titane pouvant se présenter sous forme solide, liquide ou gazeuse.

Cette mise en contact se fera de préférence sous atmosphère inerte, par exemple sous balayage d'argon.

Le titanate d'alcalino-terreux formé et précipité en cours de réaction (avec un très bon rendement, puisque pouvant être supérieur à 90 % en poids) étant solide dans les zones de température précitées, il peut être séparé facilement du milieu réactionnel qui s'enrichit progressivement en divers produits de réaction, ces produits restant pour leur part à l'état fondu.

Ainsi, après réaction, le titanate peut être séparé du bain par tout moyen connu en soi, notamment par filtration, ce par quoi l'on obtient d'une part le titanate désiré extrait sous forme de poudre et d'autre part un mélange de sels fondus dont on peut réajuster la composition en cours de réaction par rajout de réactifs de manière à ce que le procédé fonctionne de manière continue.

Bien entendu, on peut également procéder de manière discontinue, c'est à dire attendre que tout le composé du titane introduit en une seule fois ait réagi puis, à l'issue de la réaction, refroidir la masse réactionnelle et enfin séparer le titanate de sa matrice de sels, notamment par désintégration de celle-ci par un lavage avec une eau pure ou légèrement acidifiée.

Le titanate d'alcalino-terreux recueilli par l'une ou l'autre voie (continue ou discontinue) se présente sous la forme d'une poudre très homogène chimiquement et morphologiquement, et qu'il est possible de purifier encore par simple lavage à l'eau pure ou acidifiée, suivi d'un séchage.

Il peut être éventuellement souhaitable de procéder à une étape finale de broyage pour amener la poudre à une granulométrie rigoureuse.

La poudre de titanate d'alcalino-terreux ainsi obtenue permet de préparer, par frittage, des pièces denses de haute pureté particulièrement adaptées à l'industrie électronique.

Des exemples concrets, mais non limitatifs, de mise en oeuvre du procédé selon l'invention, vont maintenant être donnés.

EXEMPLE 1

Dans 416,5 g d'un bain fondu initial de composition (en poids) :

| | |
|---|---|
| Ba $(NO_3)_2$ : | 39,6 % |
| $KNO_3$ : | 45,9 % |
| NaOH : | 14,5 % |

maintenu à la température de 450° C sous argon et agité à 550 tours/mn, on introduit 50,4 g d'oxyde de titane sous forme de poudre, de telle façon que la réaction : $[Ba(NO_3)_2 + 2\ NaOH] + TiO_2 \rightarrow BaTiO_3 + 2\ NaNO_3 + H_2O$ puisse se faire, NaOH étant en excès de 20 % en poids par rapport à la stoéchiométrie.

Au cours de la réaction, la phase fondue s'enrichit en $NaNO_3$ au détriment de $Ba(NO_3)_2$, mais tout en restant parfaitement liquide.

En fin de réaction, on obtient d'une part environ 308 g d'un bain de composition en poids : $KNO_3$ (62 %) - NaNO3 (34,7 %) - NaOH (3,3%), et d'autre part environ 136,5 g de titanate de baryum précipité.

Le rendement de la réaction en titanate de baryum est de 93 en poids.

On remarque qu'au cours de l'essai, le rapport entre les masses de la phase solide ($TiO_2$ ou $BaTiO_3$) et de la phase liquide dans le milieu réactionnel varie de 12 % en début de réaction à 50 % à la fin de cette réaction.

Après destruction par un lavage à l'eau, pure ou acidifiée de la masse réactionnelle, suivi d'un séchage à 40° C, on récupère une poudre de titanate de baryum (identifié par R.X.) très pur dont le rapport Ba/Ti est de 0,99, de granulométrie moyenne 0,45µm, et de surface spécifique 10 m²/g.

Une calcination ultérieure à 700° C ou à 1000° C permet d'aboutir à un produit dont le rapport Ba/Ti est exactement ajusté à 1, présentant une granulométrie moyenne respectivement de 0,8 µm et 1,2 µm, et de surface spécifique respectivement égale à 6 m²/g et 2 m²/g.

EXEMPLE 2

Dans 404 g d'un bain fondu initial de composition (en poids) :

| | |
|---|---|
| $Ba(NO_3)_2$ : | 40,8 % |
| $KNO_3$ : | 47,3 % |
| NaOH : | 11,9 % |

maintenu à la température de 450° C sous argon et sous agitation à 550 tours/mn, on introduit 30,2 g de $TiCl_3$ en poudre, de telle façon que la réaction : $[2\ Ba(NO_3)2 + 10\ NaOH] + 2\ TiCl_3 \rightarrow 2\ BaTiO_3 + NaNO_2 + 3\ NaNO_3 + 6\ NaCl + 5\ H_2O$ puisse se faire.

La charge a été calculée de telle façon qu'il y ait un excès de NaOH de 23 % en poids, et un excès de $Ba(NO_3)_2$ de 2,2 % en poids par rapport aux quantités stochiométriques.

Au cours de la réaction, la composition de la phase fondue varie de la composition initiale à la composition suivante (% en poids)

| | |
|---|---|
| $Ba(NO_3)_2$ : | 29,9 % |
| $KNO_3$ : | 50,3 % |
| NaOH : | 6,6 % |

| | |
|---|---|
| $NaNO_2$ : | 1,8 % |
| NaOH : | 2,4 % |
| NaCl : | 9,0 % |

Dans cet exemple, la masse de la phase fondue varie peu, puisqu' elle passe de 404 g à 379 g en fin de réaction ; le rapport entre la masse de solide et la masse de la phase fondue varie peu également, puisqu'il passe de 7,5 % en poids en début de réaction à 11 % en poids en fin de réaction. La masse de $BaTiO_3$ obtenue en fin de réaction est de 40g soit un rendement de réaction en ce produit de 88 % en poids. Ce titanate de baryum (identifié par R.X.) se présente sous la forme d'une poudre de granulométrie moyenne 5 µm et possède un rapport Ba/Ti de 0,98.

**Revendications**

1/ Procédé de préparation en milieu sels fondus d'un titanate d'alcalino-terreux de for-

mule $MTiO_3$, où M désigne l'élément alcalino-terreux, caractérisé en ce qu'il consiste à faire réagir directement dans ledit milieu :
- au moins un composé de l'élément titane,
- au moins un composé A capable de réagir dans ledit milieu avec ledit composé de l'élément titane pour générer l'espèce $TiO_3^{2-}$,
- au moins un nitrate de l'élément alcalino-terreux M,

puis à récupérer, après séparation du milieu réactionnel, le titanate d'alcalino-terreux désiré.

2/ Procédé selon la revendication 1 caractérisé en ce que ledit composé de l'élément alcalino-terreux M sert également à créer, au moins en partie, ledit milieu sels fondus.

3/ Procédé selon l'une quelconque des revendications 1 et 2 caractérisé en ce que ledit composé de l'élément titane est choisi parmi le dioxyde de titane $TiO_2$, les hydroxydes de titane, les halogénures de titane, les oxyhalogénures de titane, les hydroxyhalogénures de titane et les carbonates de titane.

4/ Procédé selon la revendication 3 caractérisé en ce que ledit composé de l'élément titane est choisi parmi le dioxyde de titane et les halogénures de titane.

5/ Procédé selon la revendication 4 caractérisé en ce que lesdits halogénures sont des chlorures.

6/ Procédé selon la revendication 5 caractérisé en ce que l'on utilise le trichlorotitane ou le tétrachlorotitane.

7/ Procédé selon l'une quelconque des revendications précédentes caractérisé en ce que ledit composé A est choisi parmi un hydroxyde ou un carbonate d'alcalins ou d'alcalino-terreux.

8/ Procédé selon la revendication 7 caractérisé en ce que ledit composé A est choisi parmi les hydroxydes d'alcalins.

9/ Procédé selon la revendication 8 caractérisé en ce que ledit composé A est l'hydroxyde de sodium.

10/ Procédé selon l'une quelconque des revendications précédentes caractérisé en ce que ledit milieu sels fondus est constitué d'un ou plusieurs sels choisis parmi les halogénures et les nitrates d'alcalins ou d'alcalino-terreux.

11/ Procédé selon la revendication 10 caractérisé en ce que ledit milieu est constitué d'un mélange de nitrate de l'élément alcalino-terreux M et de nitrates d'alcalins.

12/ Procédé selon l'une quelconque des revendications précédentes caractérisé en ce que l'élément alcalino-terreux M est le baryum ou le strontium.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 027 737 (GENERAL ELECTRIC CO.)<br>* Page 13, exemple 4; page 1, revendication 1 *<br>--- | 1,3,4,<br>10,12 | C 01 G 23/00<br>C 04 B 35/46 |
| D,Y | US-A-4 293 534 (R.H. ARENDT)<br>* Colonne 7, exemple 1; colonnes 8,9, revendication 1 *<br>--- | 1,3,4,8<br>,9 | |
| A | JOURNAL OF INORGANIC NUCLEAR CHEMISTRY, vol. 37, 1975, pages 2257-2260, Pergamon Press, GB; D.H. KERRIDGE et al.: "Molten lithium nitrate-potassium nitrate eutectic: The reaction of compounds of titanium"<br>----- | | |

DOMAINES TECHNIQUES
RECHERCHES (Int. Cl.4)

C 01 G

Le présent rapport a été établi pour toutes les revendications

| Lieu de la recherche | Date d'achèvement de la recherche | Examinateur |
|---|---|---|
| LA HAYE | 06-06-1989 | LIBBERECHT-VERBEECK E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

& : membre de la même famille, document correspondant

EPO FORM 1503 03.82 (P0402)